# EUROPEAN PATENT SPECIFICATION

(11) **EP 3 878 725 B1**
(45) Date of publication and mention of the grant of the patent: **29.05.2024**
(21) Application number: 21161249.4
(22) Date of filing: 08.03.2021
(51) Int. Cl.: B62J 50/25, B62J 27/00, B62J 6/26

(54) **BEACON WITH TELESCOPICALLY EXTENDABLE LIGHT EMITTER**
TELESKOPISCH AUSZIEHBARER LICHTEMITTER
BALISE DOTÉE D'UN ÉMETTEUR DE LUMIÈRE TÉLESCOPIQUE

(30) Priority: 09.03.2020 GB 202003385
(43) Date of publication of application: 15.09.2021
(73) Proprietor: Hi-Tail Limited, Hiltingbury, Hampshire SO53 1JU (GB)
(72) Inventor: McIntyre, Brian, Hiltingbury, Hampshire SO53 1JU (GB); Costigan, Paul, Pulborough, RH12 2HX (GB); Knox, Stefan, Haslemere, GU27 2LA (GB); Davies, Theo, Haslemere, GU27 2LA (GB)
(74) Representative: Bridge-Butler, Jeremy

(56) References cited:
- US-A- 2 420 772
- US-A- 4 313 264
- US-A- 6 129 035

## Description

The present invention relates to a beacon with a telescopically extendable light emitter, for use particularly, but not exclusively, on a bicycle.

Cyclists are vulnerable to road accidents because bicycles are relatively small and are usually located at the side of roads. As such they are often not seen by other road users, in particular when turning into or out of junctions. This problem is exacerbated when drivers are in an elevated position, for example when driving a lorry, in which case cyclists can be below the driver's field of vision and be even harder to spot. A particular problem exists when lorries are turning into and out of junctions, as they can be in collision with unseen cyclists situated to one side or the other.

It is known to provide bicycles with forward and rearward facing flashing lights to increase the likelihood of their being seen by other road users. It is also known for vehicles to be provided with flags on the end of poles to signal their presence, for example on recumbent cycles and other vehicles of a low height. However, while these solutions improve the chances of cyclists being seen, they do not specifically address the issues associated with lorry drivers, or with car drivers of a generally low level of attention.

The present invention is intended to overcome some of the above described problems.

US6129035, on which the pre-characterising portion of Claim 1 is based, discloses a visual indicator for facilitating location of a car. The visual indicator disclosed in US6129035 comprises a base that is configured to be magnetically connected to a roof of a car, and a telescopically extendable mast that extends upwardly from the base. The telescopically extendable mast may be provided with a light at its upper end, or may be formed of translucent or clear sections that allow light from a lamp to pass therethrough.

The present invention provides a beacon comprising a base and a telescopically extendable light emitter mounted to a first end thereof, in which said light emitter comprises a plurality of telescoping sections, at least one of which is transparent or translucent, in which said base comprises a light source positioned to transmit light from said first end into said light emitter, in which said beacon further comprises a mounting for affixing said beacon to an article to be detected, in which said mounting comprises a stowage member, in which said stowage member comprises a fixture mechanism at a first end thereof for affixing said stowage member to said article to be detected, in which a second end of said base is mounted to a second end of said stowage member by a first hinge, said base being moveable between an unfurled position in which said base is arranged with its first end uppermost and a stowed position in which said base is co-axial with said stowage member.

Thus, the present invention provides a beacon with a light emitter which can be telescopically extended in order to be long in length, and which can be affixed to an article to be detected, such as a bicycle. The beacon can therefore emit light above the bicycle to improve its chances of being seen by other road users, in particular lorry drivers. The telescopic extendability of the light emitter allows it to be collapsed when not in use, for ease of storage.

The telescoping sections are referred to herein as being transparent or translucent, as the invention includes both. However, preferably the telescoping sections can be a translucent orange or yellow colour, so the beacon emits an orange or yellow light. Orange in particular is suitable for road use as orange is associated with warning signs. Orange or yellow are also readily discernable from red and white lights which conventionally signify the front or rear of a vehicle. In one version of the invention the telescoping sections can be a fluorescent orange or yellow colour, to make them stand out even more.

It will be appreciated that the article to be detected can be any type of vehicle, including a road-going vehicles such as motorcycles, scooters, cars and so on, but also any industrial vehicles such as fork lifts, tow-trucks, cargo transporters and so on, which it might be important to detect in an industrial setting for safety reasons. If so, the mounting will be adapted accordingly. It is also possible for the article to be detected to be a person, who could be on foot, or who could be operating a vehicle. If so, the mounting can be adapted to be worn by such a person accordingly. However, as explained further below the invention finds particular application on a bicycle.

The stowage member could be affixed to the article at any angle, and the base can also be at any angle in the unfurled position, provided the first end is uppermost. However, preferably the fixture mechanism can be for affixing the stowage member to the article to be detected substantially horizontally, and in the unfurled position the base can be substantially vertical. With this arrangement the stowage member can be mounted substantially horizontally to the rear of a bicycle, so when the base is in the unfurled position the light emitter can occupy an area rearward of and above the cyclist. The base can then be moved the stowed position when not in use.

The stowage member can comprise a trough and the first hinge can comprise an axle extending between side walls of the trough along a lateral axis spaced from an end wall of the trough by substantially the same distance as it is spaced from a bottom wall of the trough. The axle can support the base adjacent to its second end. With this arrangement the second end of the base can follow a planetary path around the axle as the base moves between the stowed and unfurled positions. The base can comprise a spring loaded locking boss at the second end thereof, and the stowage member can comprise a first socket in the end wall in which the locking boss can be removably located in the stowed position. Further, the stowage member can comprise a second socket in the bottom wall in which the locking boss can be removably located in the unfurled position. As such, the base can be locked in both the stowed and unfurled positions to prevent it moving inadvertently therefrom. The spring loaded boss can comprise a rounded end to allow it to be readily manually depressed and then levered out of the first socket and the second socket in use.

In an alternative construction to the above, the stowage member can have the same kind of first hinge and the base can comprise the same kind of spring loaded locking boss at its second end, but the stowage member can comprise only one socket in the bottom wall in which the locking boss can be removable located in the unfurled position. To secure the base and the light emitter in the stowed position the trough can comprise a resilient pipeclip in which the light emitter can be removably located. This construction provides for the light emitter to be held down inside the trough along its whole length in a way which may not be achieved without such a pipeclip. This can prevent undue movement of the base and light emitter in the trough in use.

In a preferred construction the axle can comprise a pair of spring loaded lateral bosses provided adjacent to the second end of the base, which lateral bosses can be removably mounted in opposed apertures provided in the side walls. This allows for the base and the associated light emitter to be removed from the stowage member, so the user can take those components with them when parking or storing the bicycle. This prevents easy theft of the valuable parts of the beacon. The spring loaded lateral bosses can comprise rounded ends to allow them to be readily manually depressed and then levered out of the apertures.

The light emitter can comprise a static section mounted to the first end of the base, into which the telescoping sections of the light emitter can be disposed in a collapsed position thereof. The static section can be transparent or translucent like the telescoping sections, but preferably it is opaque save for a transparent or translucent portion extending part way around its circumference. This transparent or translucent portion can face away from the mounting member when the base is in the unfurled position. As such, the transparent or translucent portion will face rearward of the bicycle and can act like a rear-facing light. The transparent or translucent portion can be a translucent red colour in contrast to the telescoping sections, as red is conventionally used to signify the rear of a vehicle.

In a preferred construction the static section can comprise a transparent or translucent tubular member disposed inside an opaque sleeve, and the sleeve can comprise an opening therein to provide the transparent or translucent portion. As such, when the light emitter is in a telescopically extended position in use the tubular member supports the telescoping sections extending from it, and the sleeve protects and supports the tubular member. This provides reinforcement for the light emitter in the extended position, which will be subjected to significant movement and forces when the bicycle is ridden in use.

When the light emitter is in the collapsed position the sleeve also protects all the telescoping sections inside it. This is relevant when the base is located in the stowage member in the stowed position and may be subjected to adverse movements and forces if the bicycle is ridden in that configuration. It is also relevant for when the base and light emitter are removed from the stowage member and carried by the user.

The telescoping sections can comprise a plurality of transparent or translucent tapered hollow sections, each one of which can comprise a lower end of a greater radius than an upper end of the preceding section. As such, the telescoping function is provided by means of each tapered section jamming against the preceding section. The telescoping sections can be made from a resilient plastics material which will facilitate a suitable interface of this kind which can only be released when subjected to a force of a pre-determined value which is calculated to be less than that which would typically be experienced in normal use, so as to prevent the light emitter from collapsing inadvertently. It will be appreciated that the strength of the interface between the telescoping sections will depend on the force applied to generate it, and hence there is a degree of variance in the value of force required to release it. However, the skilled person will be able to use their common general knowledge of materials to arrive at a suitable material, taper angle and surface finish to achieve the aim of maintaining the light emitter in an extended position arrived at manually by a typical user, when it is then subjected to the forces typically applied to a bicycle in normal use.

The telescoping sections can all be hollow, including a final section thereof. However, in a preferred construction the telescoping sections can further comprise a solid final section, a lower end of which can comprise a greater radius than an upper end of the preceding hollow section. The purpose of this construction is to allow for the final section to have a desired level of tensile strength, which may not be the case if it were hollow. Looking at it another way, the final section is a further section which would otherwise not be possible because the thickness of the walls of the telescoping sections would not allow for it to be hollow. The final section can be made from the same transparent or translucent material as the other telescoping sections so it also captures the light transmitted by the light source and emits it along its length.

The final section can comprise a cap at an upper end thereof, which can overlie the telescoping sections when the light emitter is in the collapsed positon. This protects the telescoping sections in the collapsed position, and prevents undue ingress of water or particulate matter. The cap also provides a focal point at the top of the light emitter in the extended position.

As referred to above, preferably the beacon is for use with a bicycle, and as such the fixture mechanism can be for affixing to a bicycle. In particular, it can comprise a clamp for removably mounting to the frame of a saddle of the bicycle, which clamp can comprise a fixed jaw member extending from the second end of the stowage member, and a movable jaw member for capturing the frame of the saddle against the fixed jaw member. A screw threaded bar can extend through the fixed jaw member and into a screw threaded socket on the movable jaw member. The fixed jaw member can be mounted to the second end of the stowage member by a second hinge, which second hinge can be angle lockable.

This arrangement is specifically adapted for use with the frame of a bicycle saddle of the known kind, which comprises a pair of rails which ostensibly support the rear of the saddle, but which are often also employed as support for another item, such as a saddle bag or rear light. The fixed jaw member can comprise a pre-determined width which is wider than most if not all such pairs of rails, such that it can abut against them. The moveable jaw member can also comprise a width which is wider than such pairs of rails, so it can also abut against them. The screw treaded bar then passes between the rails. The movable jaw member can be free to rotate on the screw threaded bar relative to the fixed jaw member, so it can be manually slotted between the rails before being turned though 90 degrees in order to be positioned correctly above them to perform the clamping function.

The purpose of the second hinge is to allow the stowage member to be adjusted relative to the clamp, so it can be arranged substantially horizontally, or at whatever angle the user desires. The second hinge is lockable to secure the stowage member in this position. The second hinge can be lockable by means of a nut and bolt.

The fixture mechanism can further comprise a support arm for removably mounting to a seat post of the bicycle. The support arm can extend from an underside of the stowage member and can comprise a resilient C-clamp at an outer end thereof for capturing the seat post. The C-clamp can be mounted to the outer end by a third hinge, which third hinge can be angle lockable.

The support arm provides additional support to the stowage member, and to the light emitter mounted to it. Together the clamp and the support arm provide a triangulated support for the stowage member, as they interface with two spaced apart portions of the bicycle, which form a triangle with the location the support arm extends from the underside of the stowage member.

The third hinge works in conjunction with the second hinge to allow for the position of the stowage member to be adjusted relative to the positions of both the clamp and the C-clamp. It will be appreciated that the position of the saddle in relation to the seat post will vary between individual bicycles, so the locations of the clamp and the C-clamp will also vary accordingly. The third hinge and the second hinge allow for such different positions to be adopted while maintaining the stowage member in a substantially horizontal position. The third hinge is lockable to secure the stowage member in its position. The third hinge can be lockable by means of a nut and bolt.

The light source can be any known device for generating light, including a bulb. However, preferably the light source can comprise an LED mounted on a substrate. Such constructions are well known in the bicycle lighting industry, and are suitable for this application because a large amount of light can be produced. The LED can be any known construction, which could comprise a single diode or a cluster of diodes as is more common. There can be one LED unit, or a plurality of LED units. In the latter case one or more of the LED units can emit a UV light to increase the spectral range of the light being emitted. A Fresnel lens can be arranged over the LED in order to magnify and/or direct the generated light more effectively into the light emitter. Lenses of this kind are also known in the lighting industry, and the skilled person will be able to use their common knowledge of the field to select an appropriate lens to suit the application.

As the light emitter is long in length when the telescoping sections are arranged in the extended positon it is potentially vulnerable to damage due to striking an object. If this happens damage could be caused not only to the light emitter, but also to the base to which it is attached, and the mounting to which the base is attached. Therefore, in an embodiment of the invention in which the light emitter comprises a static section mounted to the first end of the base, into which the telescoping sections of the light emitter are disposed in the collapsed position, and in which the telescoping sections comprises a plurality of tapered hollow sections, each one of which comprises a lower end of a greater radius than an upper end of the preceding section, a largest of the telescoping sections can comprise a circumferential groove formed therein at a point along its length at which its radius is less than a radius of an upper end of the static section. Preferably this is only slightly less, so in the extended position the circumferential groove is adjacent to the upper end of the static section. This circumferential groove is a point of deliberate structural weakness which is designed to fail under a pre-determined level of force. As such, if the light emitter is subjected to an impact force in the extended position the largest of the telescoping sections, which is that closest to the static section, will fail and prevent the impact force being transmitted to the base and the mounting member. It is then a relatively cheap and easy task to replace the damaged telescoping sections in order to repair the beacon.

The present invention can be performed in various ways, but three embodiments will now be described by way of example and with reference to the accompanying drawings, in which
Figure 1 is a perspective view of a beacon according to the present invention in a stowed position;
Figure 2 is a perspective view of the beacon shown in Figure 1 in an unfurled position;
Figure 3 is a perspective view of the beacon shown in Figure 1 attached to a bicycle with which it is used;
Figure 4 is a perspective view of the beacon shown in Figure 1 attached to a bicycle with which is it used, with a light emitter thereof in an extended position;
Figure 5 is a cross-sectional view of the beacon shown in Figure 1 in the unfurled position;
Figure 6 is a cross-sectional detail view of the beacon shown in Figure 1 in the unfurled position;
Figure 7 is a perspective view of the beacon shown in Figure 1 with a base thereof removed from a stowage member thereof;
Figure 8 is a perspective detail view of a second beacon of the present invention;
Figure 9 is a cross-sectional detail view of the second beacon shown in Figure 8;
Figure 10 is a perspective view of a third beacon of the present invention in an extended position; and
Figure 11 is a perspective view of a fourth beacon of the present invention in an unfurled position.

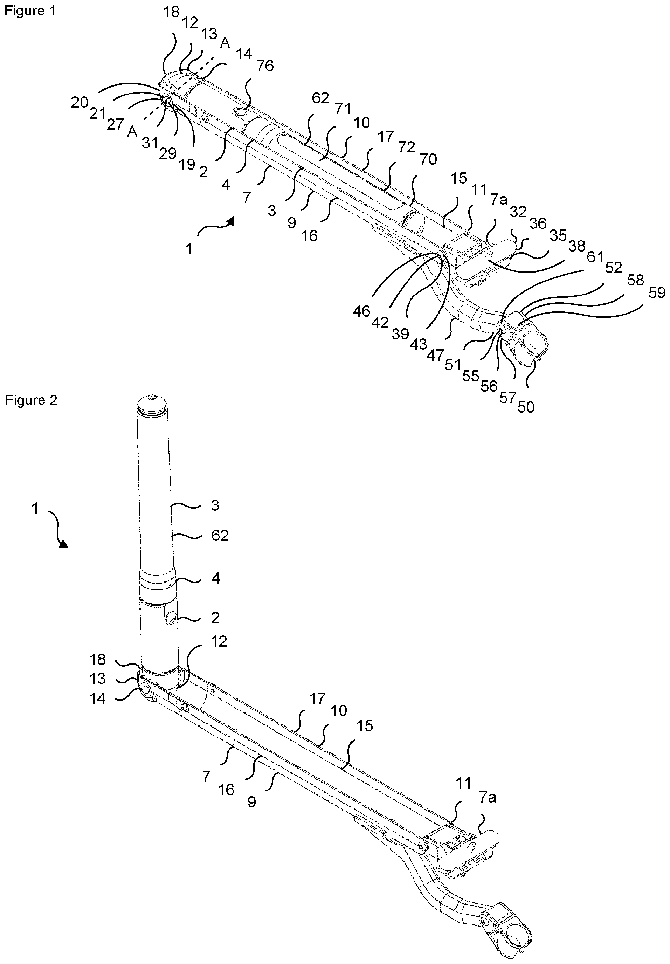

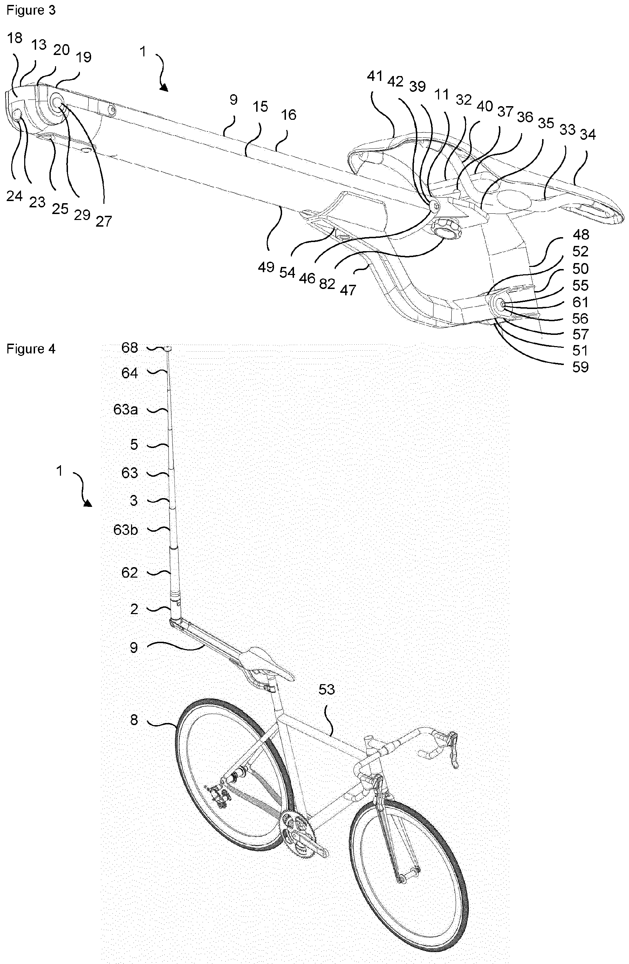

As shown in the Figures, a beacon 1 comprises a base 2 and a telescopically extendable light emitter 3 mounted to a first end 4 thereof. The light emitter 3 comprises a plurality of telescoping sections 5, which are translucent. The base 2 comprises a light source, in the form of LED 6, positioned to transmit light from the first end 4 into the light emitter 3. The beacon 1 comprises a mounting 7 for affixing the beacon 1 to an article to be detected, in the form of bicycle 8, with the base 2 arranged with its first end 4 uppermost, as shown in Figures 2 and 4.

Referring to Figures 1 and 2, the mounting 7 comprise a stowage member 9 which defines an elongate trough 10 in which the base 2 and light emitter 3 can be stowed. The stowage member 9 comprises a fixture mechanism 7a at a first end 11 thereof, and a second end 12 of the base 2 is then mounted to a second end 13 of the stowage member 9 by a first hinge 14. As such, the base 2 is movable between an unfurled position, as shown in Figure 2, in which the base 2 is arranged with its first end 4 uppermost, and a stowed position, as shown in Figure 1, in which the base 2 is co-axial with the stowage member 9.

As explained further below, the mounting 7 is configured such that the stowage member 9 can be mounted at various angles to a bicycle 8, and as such the base 2 can be at various angles when it is in the unfurled position, but in each case when the base 2 is in the unfurled position the first end 4 thereof is always uppermost. However, in the intended manner of use the fixture mechanism 7a is employed to mount the stowage member 9 to the bicycle 8 substantially horizontally, such that in the unfurled position the base 2 is substantially vertical, and the light emitter 3 occupies an area rearward of and above the cyclist, as illustrated in Figure 4.

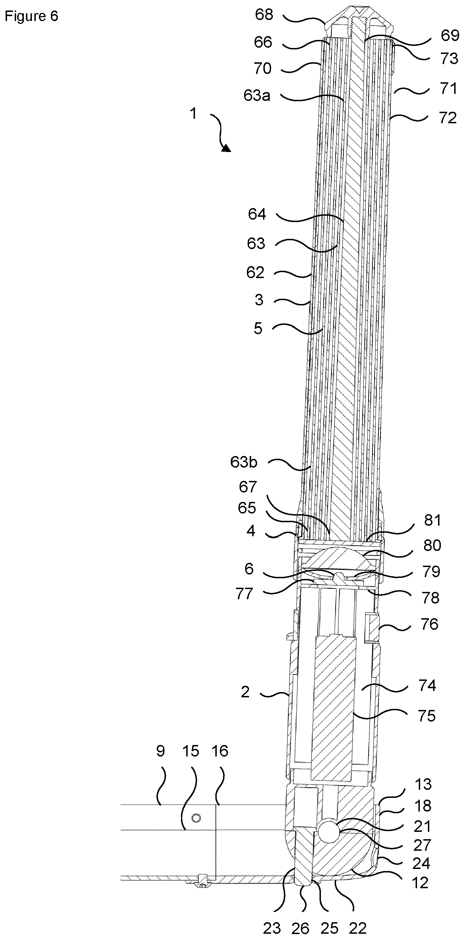

The stowage member 9 comprises a half-cylindrical section 15, parallel bracing walls 16 and 17, and end wall 18. Each bracing wall 16 and 17 comprises an enlarged support section 19 at its outer end 20. The first hinge 14 comprises an axle 21 which extends between the two support sections 19 along a lateral axis A-A, which is spaced from the end wall 18 by the same distance as it is spaced from a bottom 22 of the half-cylindrical section 15, as is best seen in Figure 6. The axle 21 then supports the base 2 adjacent to its second end 12, and allows the base 2 to rotate relative to the stowage member 9. As the second end 12 is spaced from the axle 21 it follows a planetary path about the axle 21 as the base 2 moves between the stowed and unfurled positions. In the stowed position the second end 12 is adjacent to the end wall 18, and in the unfurled position it is adjacent to the bottom 22 of the half cylindrical section 15.

The base 2 comprises a spring loaded locking boss 23 at its second end 12, and the stowage member 9 comprises a first socket 24 in the end wall 18 in which the locking boss 23 can be removably located in the stowed position. This is possible because the second end of the base 2 is adjacent to the end wall 18 in the stowed position, as described above. Further, the stowage member 9 comprises a second socket 25 in the bottom 22 of the half-cylinder section 15 in which the locking boss 23 can be removably located in the unfurled position. Again, this is possible because the second end of the base 2 is adjacent to the bottom 22 in the unfurled position. Therefore, the base 2 can be locked in both the stowed and unfurled positions to prevent it moving inadvertently therefrom. The spring loaded boss 23 comprises a rounded end 26 to allow it to be readily manually depressed, and then levered out of the first socket 24 and the second socket 25 to allow the base 2 to be unlocked from the stowed or unfurled positions in use. Likewise, the rounded end 26 also allows the boss 23 to ride smoothly against the surfaces of the end wall 18 and the bottom 22 and be depressed thereby as it approaches the first socket 24 and second socket 25 when it is moved into the stowed and unfurled positions in use.

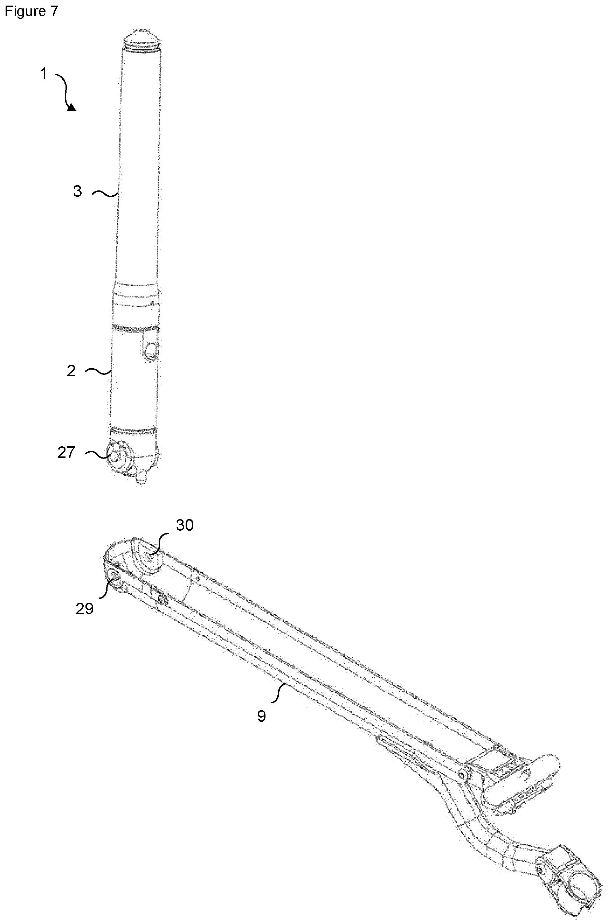

The axle 21 is not a single component, but comprises a pair of spring loaded lateral bosses, only one of which 27 is visible, which are provided adjacent to the second end 12 of the base 2. The lateral bosses 27 are removably mounted in opposed apertures 29 and 30, provided in the enlarged support sections 19 of the side walls 16 and 17. The lateral bosses 27 can be manually depressed to such an extent that they can be removed from the apertures 29 and 30 to allow for the base 2 and the associated light emitter 3 to be removed from the stowage member 9, as shown in Figure 7. This allows the user to take those components with them when parking or storing the bicycle 8. The spring loaded lateral bosses 27 each comprise a rounded end 31 to allow them to be readily manually depressed and then levered out of the apertures 29 and 30 in order to remove the base 2 from the stowage member 7. Likewise, the rounded ends 31 also allow the lateral bosses 27 to ride smoothly against the surface of the half-cylindrical section 15 and be depressed thereby as they approach the apertures 29 and 30 when the base 2 is being refitted to the stowage member 9.

The fixture mechanism 7a is for affixing the beacon 1 to the bicycle 8. In particular, it comprises a clamp 32 for removably mounting to the frame 33 of a saddle 34 of the bicycle 8 (visible in Figure 3). The clamp 32 comprises a fixed jaw member 35 extending from the second end 13 of the stowage member 9, and a movable jaw member 36 for capturing the frame 33 of the saddle 34 against the fixed jaw member 35. A screw threaded bar 37 extends through the fixed jaw member 35 and into a screw threaded socket 38 on the movable jaw member 36. As such, rotation of the screw threaded bar 37 moves the movable jaw member 36 relative to the fixed jaw member 35 in order to perform the necessary clamping function. The fixed jaw member 35 is mounted to the second end 13 of the stowage member 9 by a second hinge 39, which is angle lockable.

Referring to Figure 3, the clamp 32 is specifically adapted for use with frame 33, which is of the common type comprising a pair or rails 40 which ostensibly support the rear 41 of the saddle 34, but which are often also employed as support for another item, such as a saddle bag or rear light. The fixed jaw member 35 comprises a pre-determined width which is wider than the pair of rails 40, such that it can abut against them as shown in Figure 3. The moveable jaw member 36 also comprises a width which is wider than the pair of rails 40, so it can also abut against them. The screw treaded bar 37 then passes between the rails 40. The movable jaw member 36 is not axially restrained, so it is free to rotate on the screw threaded bar 37 relative to the fixed jaw member 35, so it can be arranged at substantially 90 degrees thereto in order to be manually slotted between the rails 40, before being turned though 90 degrees in order to be positioned correctly above them to perform the clamping function.

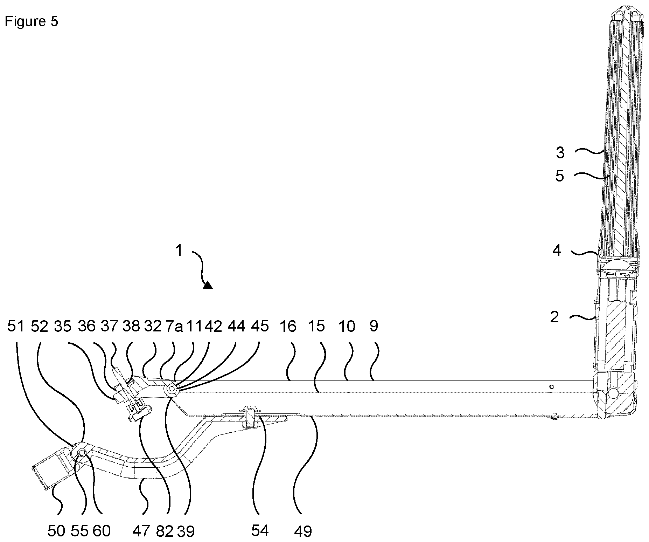

The second hinge 39 comprises a first screw threaded bolt 42 which passes through a pair of opposed first openings 43 provided in the side walls 16 and 17 at the first end 11 of the stowage member 9, and through a first lateral hole 44 provided in a rear portion 45 of the fixed jaw member 35 (visible in Figure 5), which first lateral hole 44 is laterally aligned with the first openings 43. The head 46 of the first bolt 42 abuts against side wall 16 and a first screw threaded nut (not visible) is provided at side wall 17. Tightening the first bolt 42 against the first nut fixes the angular position of the fixed jaw member 35 relative to the stowage member 9, due to the rear portion 45 being captured between the side walls 16 and 17.

The purpose of the second hinge 39 is to allow the angular position of the stowage member 9 to be adjusted relative to the clamp 32, so it can be arranged substantially horizontally as shown in the Figures, or at whatever angle the user desires. This is necessary because the angular positon of the rails 40 relative to horizontal may be different on different bicycles, leading to the angular position of the fixed jaw member 35 when secured in place being variable.

Referring to Figure 3, the fixture mechanism 7a further comprises a support arm 47 for removably mounting to the seat post 48 of the bicycle 8. The support arm 47 extends from an underside 49 of the half-cylindrical section 15, and comprises a resilient C-clamp 50 at an outer end 51 thereof for capturing the seat post 48. The C-clamp 50 is made from a resilient plastics material, and is designed to flex sufficiently enough when applied to the seat post 48 to open and snap-fit around the seat post 48. The support provided by the C-clamp 50 to the beacon 1 is radial to the seat post 48 rather than axial thereto, so it is not necessary for the C-clamp 50 to retain the seat post 48 axially to any particular extent. It is simply necessary for it so stay in a radial position relative to the seat post 48, and as such the resilient C-clamp 50 is sufficient for the purpose. The C-clamp 50 is mounted to the outer end 51 of the support arm 47 by a third hinge 52, which is angle lockable.

The C-clamp 50 is annular, so is best suited to use with annular seat posts of the same or a similar diameter, which are found on a majority of bicycles. However, it will be appreciated that some bicycles have non-annular seat posts, or seat posts of a smaller or larger diameter. If so, the C-clamp 50 can be switched out for another which is more suitable. It will also be appreciated that the C-clamp 50 can only be applied to the seat post 48 if it extends from the frame 53 of the bicycle 8 a sufficient distance, but this is the case for most users.

The support arm 47 provides additional support to the stowage member 9, and to the light emitter 3 mounted to it. Together the clamp 32 and the support arm 47 provide a triangulated support for the stowage member 9, as they interface with two spaced apart portions of the bicycle 8, namely the saddle rails 40 and the seat post 48, which form a triangle with the location 54 that the support arm 47 extends from the underside 49 of the half-cylindrical section 15. As such, the stowage member 9 is braced and adequately supported to perform its function.

The third hinge 52 comprises a second screw threaded bolt 55 which passes through a pair of opposed second openings 56 provided in a pair of parallel tabs 57 and 58 extending from the rear 59 of the C-clamp 50, and through a second lateral hole 60 provided at the outer end 51 of the support arm 47 (visible in Figure 5), which second lateral hole 60 is laterally aligned with the second openings 56. The head 60 of the second bolt 55 abuts against tab 57 and a screw threaded second nut (not visible) is provided at tab 58. Tightening the second bolt 55 against the second nut fixes the angular position of the C-clamp 50 relative to the support arm 47 due to the outer end 51 being captured between the tabs 57 and 58.

The third hinge 52 works in conjunction with the second hinge 39 to allow for the position of the stowage member 9 to be adjusted relative to the positions of both the clamp 32 and the C-clamp 50. Or, to put it another way, for the angular positions of the fixed jaw member 35 and the C-clamp 50 to be adjusted to suit the bicycle 8 when the stowage member 9 is substantially horizontal. It will be appreciated that the position of the saddle 34 in relation to the seat post 48 will vary between individual bicycles, because the saddle 34 can be adjusted in a longitudinal direction of the bicycle 8. Also, the angle of the seat post 48 can be different between different bicycle frames. As such, the angular positions of the fixed jaw member 35 and the C-clamp 50 will need to be adjusted to suit. For instance, with the clamp 32 fitted to the saddle 34 the angle of the seat post 48 relative to the C-clamp 50 will be determined, and the C-clamp 50 will then need to be angularly adjusted relative to the support arm 47 in order to interface correctly with the seat post 48. Or, to put it another way, with the C-clamp 50 fitted to the seat post 48 the angle of the fixed jaw member 35 relative to the rails 40 will be determined, and the fixed jaw member 35 will then need to be angularly adjusted relative to the stowage member 9 in order to interface correctly with the rails 40. It will be appreciated that these angular relationships can be adjusted simultaneously. The user would hold the stowage member 9 substantially horizontally and present the clamp 32 and the C-clamp 50 to the bicycle 8, and adjust the second hinge 39 and the third hinge 52 accordingly.

The telescoping sections 5 of the light emitter 3 are moveable between a collapsed position, as shown in Figures 1, 2, 5 and 6, and an extended position, as shown in Figure 4. Referring to Figures 4 and 6 the light emitter 3 comprises a static section 62, and five telescoping sections 5. The telescoping sections 5 comprise four tapered hollow sections 63 and a solid final tapered section 64. Each of the four hollow sections 63 comprises a lower end 65 of a greater radius than an upper end 66 of the preceding section. Likewise the solid section 64 comprises a lower end 67 with a greater radius than an upper end 66 of the final hollow section 63a. As such, the extended position is achieved by means of each hollow section 63 jamming against the preceding section, and by means of the solid section 64 jamming against the final hollow section 63a. The hollow sections 63 and the solid section 64 are made from a resilient plastics material which facilitates a suitable interface which can only be released when subjected to a force of a pre-determined value which is calculated to be less than that which would typically be experienced in normal use, so as to prevent the light emitter 3 from collapsing inadvertently. It will be appreciated that the strength of the interface depends on the force applied to generate it, and hence there is a degree of variance in the value of force required to release it. However, a suitable material, taper angle and surface finish are used for hollow sections 63 and the solid section 64 such that the light emitter 3 is maintained in the extended position when placed therein by the user, and when it is then subjected to the forces typically applied to bicycle 8 in normal use.

The reason for the final section 64 to be solid is because it allows it to have a higher tensile strength than if it were also hollow. The final section 64 also comprises a cap 68 at an upper end 69 thereof, which overlies the telescoping sections 5 when the light emitter 3 is arranged in the collapsed position as shown in Figures 1, 2, 5 and 6. This protects the telescoping sections 5 in the collapsed position, and prevents undue ingress of water or particulate matter. The cap 68 also provides a focal point at the top of the light emitter 3 in the extended position, as shown in Figure 4.

The four hollow sections 63 and the solid section 64 are made from an orange translucent material, so they all emit an orange light in use. This is suitable for road use as orange is associated with warning signs. It is also readily discernable from red and white lights which conventionally signify the front or rear of a vehicle.

The static section 62 is mounted to the first end 4 of the base 2, and the telescoping sections 5 of the light emitter 3 are disposed in the static section 62 in the collapsed position, as shown in Figures 1, 2, 5 and 6. The static section 62 comprises an opaque sleeve 70 which comprises an opening 71 (best seen in Figure 1) extending part way around its circumference. A translucent tubular member 72 is disposed inside opaque sleeve 70, such that it fills the space inside the opening 71. As will be appreciated from the Figures, the opening 71 faces away from the mounting 7 when the base 2 is in the unfurled position as shown in Figures 2 and 4. As such, the portion of the tubular member 72 inside the opening 71 faces rearward of the bicycle 8 and acts like a rear-facing light. The tubular member 72 is red in colour, as red is conventionally used to signify the rear of a vehicle.

Like the four hollow sections 63 the tubular member 72 is tapered and comprises an upper end 73 of a lesser radius than the lower end 65 of the first hollow section 63b. As such, the extended position is achieve by means of the first hollow section 63b jamming against the tubular member 72 in the same manner as described above. The tubular member 72 is made from the same resilient plastics material as the hollow sections 63 so the interface between the tubular member 72 and the first hollow section 63b is the same as that between the other hollow sections 63.

When the light emitter 3 is in the extended position the tubular member 72 supports the four hollow sections 63 extending from it, and the sleeve 70 protects and supports the tubular member 72, giving the static section 62 as a whole greater strength. This provides reinforcement for light emitter 3 in the extended position, as it will be subjected to significant movement and forces when the bicycle 8 is ridden in use.

When the light emitter 3 is in the collapsed position the sleeve 70 also protects the tubular member 72, the four hollow sections 63 and the solid section 64 all housed inside it. This is relevant when the base 2 is in the stowed position in the stowage member 9 and may be subjected to adverse movements and forces if the bicycle 8 is ridden in that configuration. It is also relevant for when the base 2 and light emitter 3 are removed from the stowage member 9 and carried by the user, as shown in Figure 7.

Referring to Figure 6, the base 2 defines an internal area 74, in which is housed battery 75 and suitable control circuitry (not shown). An activation button 76 is provided to switch the LED 6 on and off in use. The LED 6 is mounted on a substrate 77 which is itself mounted on an internal shelf 78 in the internal area 74. The LED 6 is surrounded by a reflector dish 79, on which is mounted Fresnel lens 80. Above Fresnel lens 80 is a transparent cover 81, on which the tubular member 72, the four hollow sections 63 and the solid section 64 rest in the collapsed position. Therefore when the LED 6 is switched on it emits light which is transmitted directly through the Fresnel lens 80, or which hits the reflector dish 79 and is then re-directed through the Fresnel lens 80. The light passing through the Fresnel lens 80 is focused and directed by its particular shape, and transmitted through the cover 81 into the light emitter 3. When the light emitter 3 is in the extended position the light travels up into the internal area inside the tubular member 72 and the four hollow sections 63. It is then travels directly therethrough or reflects one or more times off the inside of the tubular member 72 and/or any of the hollow sections 63 before traveling therethrough. This results in a red light being emitted from the opening 71, due to the red coloring of the tubular member 72 absorbing light in all colours of the visible spectrum other than red. It also results in an orange light being emitted from the four hollow sections 63, due to their orange coloring, which absorbs light in all colours of the visible spectrum other than orange. Some of the light also travels into the solid section 64 and is emitted therefrom, which also illuminates the solid section 64 an orange colour due to its orange coloring.

In use the beacon 1 operates follows. Firstly, the stowage member 9 is mounted to the bicycle 8. The mounting 7 is offered up to the bicycle 8 in a substantially horizontal position, and the C-clamp 50 is resiliently snap-fitted to the seat post 48, with the third hinge 52 loose to allow the C-clamp 50 to move relative to outer end 51 of the support arm 47. This allows the clamp 32 to then be freely offered up to the saddle 34. The second hinge 39 is also loose to allow the fixed jaw member 35 to be applied to the saddle rails 40. A the same time the movable jaw member 36 is slotted through the saddle rails 40, before being turned through 90 degrees. The screw threaded bar 37 is then manually rotated in the screw threaded socket 38 by means of knob 82 to secure the clamp 32 to the saddle rails 40. The user then rotates the stowage member 9 relative to the clamp 32 and the C-clamp 50 on the second hinge 39 and the third hinge 52 until the stowage member 9 is substantially horizontal. They then tighten the first bolt 42 and the second bolt 55 to lock the positions of the second hinge 39 and the third hinge 52 respectively. This holds the stowage member 13 in position on the bicycle 8.

To use the beacon 1 the user moves the base 2 from the stowed position to the unfurled position. To do so they depress the locking boss 23 to release it from the first socket 24, which allows the base 2 to be manually rotated on the first hinge 14 through 90 degrees until it reaches the unfurled position as shown in Figure 2. During this movement the locking boss 23 rides against the surfaces of the end wall 18 and the bottom 22 of the half-cylindrical section 15 until it reaches the second socket 25, and drops therein as shown in Figure 6. The base 2 is now locked in the unfurled position.

The user then manually moves the light emitter 3 into the extended positon. To do so they can grasp the cap 68 and pull it upwards with sufficient force to draw the solid section 64 and the four hollow sections 64 out from the static section 62. As each of the telescoping sections 5 is withdrawn in this way it comes into contact with the next section and it is also drawn out. Namely, the lower end 67 of the solid section 64 has a greater radius than the upper end 66 of the final hollow section 63a, so these two parts come into contact with one another and the force applied to the solid section 64 is transmitted to the final hollow section 63a. Further, the lower end 65 of each hollow section 63 has a greater radius than the upper end 66 of the next, so when these parts come into contact with one another the force applied to the solid section 64 is also transmitted to the each hollow section 63 in turn. Once the lower end 65 of the first hollow section 63b comes into contact with the upper end 73 of the tubular member 72 any further force applied to the solid section 64, or to any of the telescoping sections 5, serves to jam the telescoping sections together so they maintain their relative positions, as shown in Figure 4.

Due to the resilient plastics material from which they are made, the taper angle they all feature, and their surface finish, the solid section 64, the hollow sections 63 and the tubular member 72 can be manually jammed together in this way by the user with relative ease. Ideally the interfaces between the parts is such that it can only be released when subjected to a force of a pre-determined value which is calculated to be greater than that which would typically be experienced in normal use, so as to prevent the light emitter 3 from collapsing inadvertently. However, it will be appreciated that the strength of the interface depends on the force applied to generate it, and hence there is a degree of variance in the value of force required to release it.

The user then depresses the activation button 76 on the base 2 to switch on the LED 6, and the light emitter 3 is illuminated. This results in a red light being emitted from the opening 71, which as referred to above faces rearwardly of the bicycle 8 and acts as a rear light. It also results in an orange light being emitted from the hollow sections 63 and the solid section 64, so as to act as a beacon to allow the bicycle 8 and its user to be readily detected.

When the beacon 1 is no longer required the user can switch it off by depressing the activation button 76 again, which switches the LED 6 off. The beacon 1 can be left with the light emitter 3 in the extended position as shown in Figure 4, but it may be more convenient to move it to the collapsed position. To do so the user manually moves the telescoping sections 5 into the collapsed position as shown in Figures 2, 5 and 6 by applying a downward force thereto which releases the interfaces between their surfaces. The telescoping sections 5 all drop down into the static section 62 until they rest on the transparent cover 81. The cap 68 overlies the telescoping sections 5 inside the static section 62, which protects them from undue ingress of water or particulate matter.

The beacon 1 can be left with the base 2 in the unfurled position as shown in Figure 2, but once again it may be more convenient to move it to the stowed position. To do so the user depresses the locking boss 23 to release it from the second socket 25, which allows the base 2 to be manually rotated on the first hinge 14 through 90 degrees until it reaches the stowed position as shown in Figure 1. During this movement the locking boss 23 rides against the surfaces of the end wall 18 and the bottom 22 of the half-cylindrical section 15 and the end wall 18 until it reaches the first socket 24, and moves therein as shown in Figure 3. The base 2 is now locked in the stowed position and both the base 2 and the light emitter 3 are safely stowed in the stowage member 9.

If desired the user can remove the base 2 and the light emitter 3 from the stowage member 9 for safekeeping, which they may do if they are parking bicycle 8 in a public space for a prolonged period of time. To do so they depress the lateral bosses 27 to lever them out from the opposed apertures 29 and 30, and then lift the base 2 free from the stowage member 9 as shown in Figure 7. Should they wish to do so the user can use the light emitter 3 in this detached configuration to conveniently alert others to their presence or location. The light emitter 3 can be extended as described above, and the LED 6 switched on in order to illuminate it. The light emitter 3 can be conveniently held by the base 2.

To replace the base 2 and light emitter 3 in the stowage member 9 the user presents the second end 12 of the base 2 to the second end 13 of the stowage member 9, and manually depresses the lateral bosses 27 and 28 to allow the second end 12 of the base 2 to be located in the half cylindrical section 15. The rounded ends 31 of the lateral bosses 27 ride against the surface of the half-cylindrical section 15 and are depressed thereby as they approach the apertures 29 and 30. Once the lateral bosses 27 are aligned with the apertures 29 and 30 they move therein to secure the base 2 in position. The base 2 can then be rotated on the first hinge 14 to the stowed or unfurled position, in the manner described above.

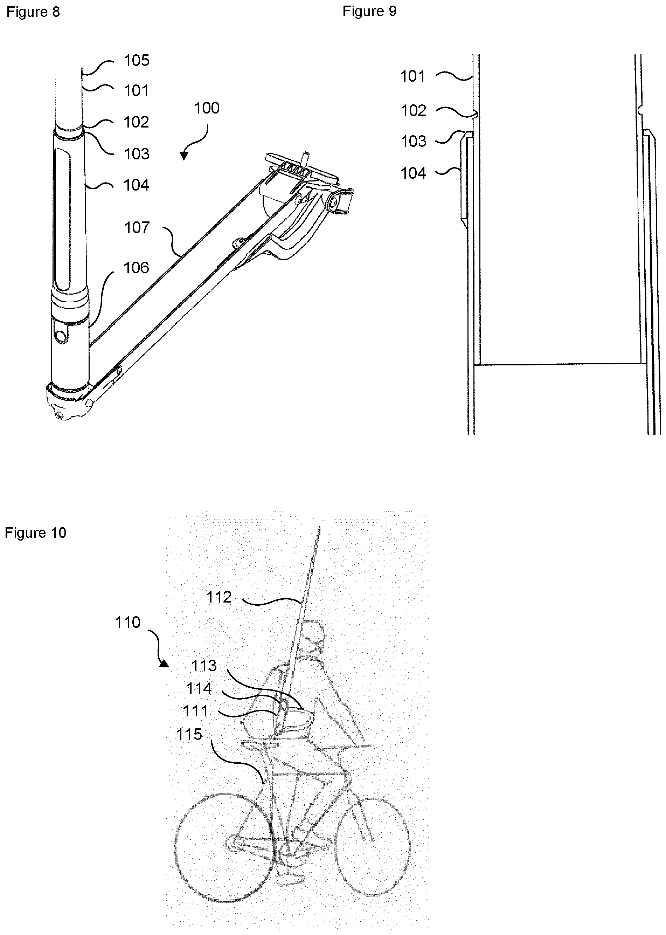

The present invention can be altered without departing from the scope of claim 1. For example, in a second embodiment shown in Figures 8 and 9, beacon 100 is like beacon 1 except that the first hollow telescoping section 101 comprises a circumferential groove 102 formed therein at a point along its length at which its radius is slightly less than that of the upper end 103 of the static section 104. As such, in the extended position the circumferential groove 102 is just above the upper end 103 of the static section 104. The circumferential groove 102 is a point of deliberate structural weakness which is designed to fail under a pre-determined level of force. As such, if the light emitter 105 is subjected to an impact force in the extended position the first hollow section 101 will fail and prevent the impact force being transmitted to the base 106 and the mounting 107, which might otherwise cause them damage. It is then a relatively cheap and easy task to replace the damaged telescoping sections in order to repair the beacon 100.

As set out above, the invention includes a beacon for attachment to any article to be detected, which could be any road going vehicles such as motorcycles, scooters, cars and so on, but also any industrial vehicles such as fork lifts, tow-trucks, cargo transporters and so on, which it might be important to detect in an industrial setting for safety reasons. Therefore, in alternative embodiments (not shown) the mounting in each case is adapted to be fitted to a specific vehicle, being one of those mentioned above. It is also possible for the article to be detected to be a person, who could be on foot, or who could be operating a vehicle. If so, the mounting can be adapted to be worn by such a person accordingly. Such an embodiment is shown in Figure 10, in which beacon 110 comprises a base 111 and light emitter 112 like base 2 and light emitter 3 describe above, but which beacon 110 features a mounting in the form of belt strap 113 to be worn around the waist. In this position the first end 114 of the base 111 is uppermost. In Figure 10 the user is shown riding a bicycle 115, so the advantage achieved is similar to that achieved by beacon 1 described above, but it will be appreciated that the user could be on foot, using any vehicle or be on horseback.

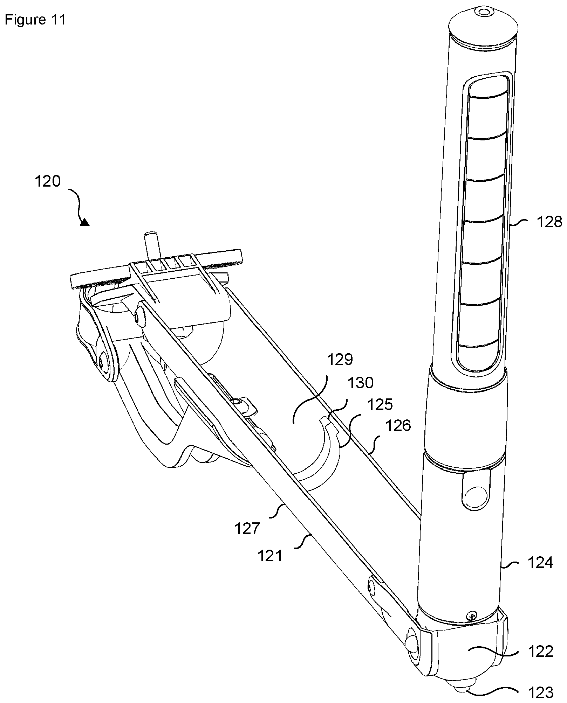

It is also possible to use alternative mechanical mechanisms to facilitate the movement and locking in place of the base and light emitter. For example, in another alternative embodiment, shown in Figure 11, beacon 120 comprises a stowage member 121 which does not have a first socket in its end wall 122. As such the locking boss 123 does not act to lock the base 124 in the stowed position as in beacon 1 described above. Instead, a resilient pipeclip 125 is provided in the elongate trough 126. The pipeclip 125 is secured to the bottom of the half cylindrical section 127 by a bolt (not visible) passing through the underside of the half cylindrical section 127, and through the bottom of the pipeclip 125. The pipeclip 125 has a smaller external radius than the internal radius of the half cylindrical section 127, so it has sufficient clearance to expand in use. It also has a smaller internal radius than the light emitter 128, so it can resiliently retain it in use. In its unextended resting state the pipeclip 125 has a circumferential extent which is greater than half a cylinder, such that it defines an opening 129 at its top 130 which is shorter in length than the width of the pipeclip 125.

When the base 124 and the light emitter 128 are manually moved into the stowed position by the user, the light emitter 128 is applied to the top 130 of the pipeclip 125, and sufficient downward force is applied by the user to force the top 130 of the pipeclip 125 to laterally expand until the opening 129 reaches a size equal to the width of the light emitter 128 at that point, which size is large enough for the light emitter 128 to pass through. As the pipeclip 125 has a smaller internal radius than the light emitter 128, once it surrounds the light emitter 28 it is held in a radially extended state, such that a radially inwardly facing spring force is applied to the light emitter 128 to removably retain it in place in the stowed position. In addition, as the pipeclip 125 has a circumferential extent which is greater than half a cylinder it also retains the light emitter 128 therein in a grasping manner.

To move the light emitter 128 into the unfurled position the user manually applies sufficient upward pressure thereto to force the pipeclip 125 to radially expand until the opening 129 reaches a size equal to the width of the light emitter 128, and the light emitter 128 can be removed from the pipeclip 125.

In another alternative embodiment (not shown), the telescoping sections are yellow in colour instead of orange, so the beacon emits a yellow light.

In another alternative embodiment (not shown), the telescoping sections are provided with a fluorescent paint so the beacon emits a fluorescent light.

In another alternative embodiment (not shown), the beacon is adapted for use with an electric bicycle, and the light source is powered by the battery of the electric bicycle. This can be achieved with any known electrical power source and suitable wiring and connectors to the light emitter.

Therefore, the present invention provides a beacon with a light emitter which can be telescopically extended in order to be long in length, and which can be mounted to an article to be detected, such as a bicycle or person. The beacon emits a clear warning light above the user to improve their chances of being seen by other road users, in particular lorry drivers. The telescopic extendability of the light emitter allows it to be collapsed when not in use, for ease of storage.

## Claims

1. A beacon (1) comprising a base (2) and a telescopically extendable light emitter (3) mounted to a first end (4) thereof, in which said light emitter (3) comprises a plurality of telescoping sections (5), at least one of which is transparent or translucent, in which said base (2) comprises a light source (6) positioned to transmit light from said first end (4) into said light emitter (3), wherein said beacon (1) further comprises a mounting (7) for affixing said beacon (1) to an article (8) to be detected, **characterized in that** said mounting (7) comprises a stowage member (9), in which said stowage member (9) comprises a fixture mechanism (7a) at a first end (11) thereof for affixing said stowage member (9) to said article (8) to be detected, in which a second end (12) of said base (2) is mounted to a second end (13) of said stowage member (9) by a first hinge (14), said base (2) being moveable between an unfurled position in which said base (2) is arranged with its first end (4) uppermost and a stowed position in which said base (2) is co-axial with said stowage member (9).

2. A beacon (1) as claimed in claim 1 in which said fixture mechanism (7a) is for affixing said stowage member (9) to said article (8) to be detected substantially horizontally, and in which in said unfurled position said base (2) is substantially vertical.

3. A beacon (1) as claimed in claim 2 in which said stowage member (9) comprises a trough (10), in which said first hinge (14) comprises an axle (21) extending between side walls of said trough (10) along a lateral axis spaced from an end wall of said trough (10) by substantially the same distance as it is spaced from a bottom wall of said trough (10), in which said axle (21) supports said base (2) adjacent to said second end (12), in which said base (2) comprises a spring loaded locking boss (23) at said second end (12) thereof, in which said stowage member (9) comprises a first socket (24) in said end wall in which said locking boss (23) is removably located in said stowed position, and in which said stowage member (9) comprises a second socket (25) in said bottom wall in which said locking boss (23) is removably located in said unfurled position.

4. A beacon (1) as claimed in claim 2 in which said stowage member (9) comprises a trough (10), in which said first hinge (14) comprises an axle (21) extending between side walls of said trough (10) along a lateral axis spaced from an end wall of said trough (10) by substantially the same distance as it is spaced from a bottom wall of said trough (10), in which said axle (21) supports said base (2) adjacent to said second end (12), in which said base (2) comprises a spring loaded locking boss (23) at said second end (12) thereof, in which said stowage member (9) comprises a socket (25) in said bottom wall in which said locking boss (23) is removably located in said unfurled position, and in which said trough (10) comprises a resilient pipeclip (125) in which said light emitter (3) is removably located in said stowed position.

5. A beacon (1) as claimed in claim 3 or 4 in which said axle (21) comprises a pair of spring loaded lateral bosses (27) provided adjacent to said second end (12) of said base (2), which lateral bosses (27) are removably mounted in opposed apertures provided in said side walls.

6. A beacon (1) as claimed in claim 2 in which said light emitter (3) comprises a static section (62) mounted to said first end (4) of said base (2), into which said telescoping sections (5) of said light emitter (3) are disposed in a collapsed positon thereof, in which said static section (62) is opaque save for a transparent or translucent portion extending part way around its circumference.

7. A beacon (1) as claimed in claim 6 in which said transparent or translucent portion faces away from said mounting member (7) when said base (2) is in said unfurled position.

8. A beacon (1) as claimed in claim 6 in which said static section (62) comprises a transparent or translucent tubular member (72) disposed inside an opaque sleeve (70), in which said sleeve (70) comprises an opening (71) therein to provide said transparent or translucent portion.

9. A beacon (1) as claimed in claim 6 in which said telescoping sections (5) comprise a plurality of transparent or translucent tapered hollow sections (63), each one of which comprises a lower end of a greater radius than an upper end of the preceding section, and in which said telescoping sections (5) further comprise a solid final section (64), a lower end of which comprises a greater radius than an upper end of the preceding hollow section.

10. A beacon (1) as claimed in claim 9 in which said final section (64) comprises a cap (68) at an upper end thereof, which cap (68) overlies said telescoping sections (5) when said light emitter (3) is arranged in said collapsed position.

11. A beacon (1) as claimed in claim 2 in which said fixture mechanism (7a) is for affixing to a bicycle (8) with which said beacon (1) is used, in which said fixture mechanism (7a) comprises a clamp (32) for removably mounting to the frame (33) of a saddle (34) of said bicycle (8), said clamp (32) comprising a fixed jaw member (35) extending from said first end (11) of said stowage member (9) and a movable jaw member (36) for capturing said frame (33) of said saddle (34) against said fixed jaw member (35), in which a screw threaded bar (37) extends through said fixed jaw member (35) and into a screw threaded socket on said movable jaw member (36), in which said fixed jaw member (35) is mounted to said first end (11) of said stowage member (9) by a second hinge (39), and in which said second hinge (39) is angle lockable.

12. A beacon (1) as claimed in claim 11 in which said fixture mechanism (7a) further comprises a support arm (47) for removably mounting to a seat post (48) of said bicycle (8), said support arm (47) extending from an underside of said stowage member (9) and comprising a resilient C-clamp (50) at an outer end thereof for capturing said seat post (48), in which said C-clamp (50) is mounted to said outer end by a third hinge (52), and in which said third hinge (52) is angle lockable.

13. A beacon (1) as claimed in claim 1 in which said light source comprises an LED (6) mounted on a substrate, and a Fresnel lens (80) arranged over said LED (6).

14. A beacon (1) as claimed in claim 1 in which said light emitter (3) comprises a static section (62) mounted to said first end (4) of said base (2), into which said telescoping sections (5) of said light emitter (3) are disposed in a collapsed position thereof, in which said telescoping sections (5) comprise a plurality of tapered hollow sections (63), each one of which comprises a lower end of a greater radius than an upper end of the preceding section, and in which a largest of said telescoping sections (5) comprises a circumferential groove (102) formed therein at a point along its length at which its radius is less than a radius of an upper end of the static section (62) .

## Patentansprüche

1. Leuchtbake (1), umfassend einen Fuß (2) und einen teleskopisch ausziehbaren Lichtemitter (3), der an dessen erstem Ende (4) angebracht ist, wobei der Lichtemitter (3) eine Mehrzahl von Teleskopabschnitten (5) umfasst, von denen mindestens einer transparent oder transluzent ist, wobei der Fuß (2) eine Lichtquelle (6) umfasst, die dazu angeordnet ist, Licht von dem ersten Ende (4) in den Lichtemitter (3) zu übertragen, wobei die Leuchtbake (1) ferner ein Befestigungselement (7) zum Befestigen der Leuchtbake (1) an einem kenntlich zu machenden Artikel (8) umfasst, **dadurch gekennzeichnet, dass** das Befestigungselement (7) ein Stauelement (9) umfasst, wobei das Stauelement (9) einen Befestigungsmechanismus (7a) an dessen einem Ende (11) umfasst, um das Stauelement (9) an dem kenntlich zu machenden Artikel (8) zu befestigen, wobei ein zweites Ende (12) des Fußes (2) über ein erstes Scharnier (14) an einem zweiten Ende (13) des Stauelements (9) angebracht ist, wobei der Fuß (2) zwischen einer entfalteten Position, in der der Fuß (2) so angeordnet ist, dass sein erstes Ende (4) am weitesten oben ist, und einer verstauten Position beweglich ist, in der der Fuß (2) mit dem Stauelement (9) koaxial ist.

2. Leuchtbake (1) gemäß Anspruch 1, wobei der Befestigungsmechanismus (7a) dazu dient, das Stauelement (9) an dem kenntlich zu machenden Artikel (8) im Wesentlichen waagrecht zu befestigen, und wobei der Fuß (2) in der entfalteten Position im Wesentlichen senkrecht ist.

3. Leuchtbake (1) gemäß Anspruch 2, wobei das Stauelement (9) eine Wanne (10) umfasst, wobei das erste Scharnier (14) eine Achse (21) umfasst, die sich zwischen Seitenwänden der Wanne (10) entlang einer Querachse erstreckt, die von einer Stirnwand der Wanne (10) um im Wesentlichen den gleichen Abstand beabstandet ist, mit dem sie von einer Bodenwand der Wanne (10) beabstandet ist, wobei die Achse (21) den Fuß (2) in der Nähe zu dessen zweitem Ende (12) abstützt, wobei der Fuß (2) einen federgespannten Verriegelungsknopf (23) an dessen zweitem Ende (12) umfasst, wobei das Stauelement (9) eine erste Aufnahme (24) in der Stirnwand umfasst, in der der Verriegelungsknopf (23) in der verstauten Position entfernbar angeordnet ist, und wobei das Stauelement (9) eine zweite Aufnahme (25) in der Bodenwand umfasst, in der der Verriegelungsknopf (23) in der entfalteten Position entfernbar angeordnet ist.

4. Leuchtbake (1) gemäß Anspruch 2, wobei das Stauelement (9) eine Wanne (10) umfasst, wobei das erste Scharnier (14) eine Achse (21) umfasst, die sich zwischen Seitenwänden der Wanne (10) entlang einer Querachse erstreckt, die von einer Stirnwand der Wanne (10) um im Wesentlichen den gleichen Abstand beabstandet ist, mit dem sie von einer Bodenwand der Wanne (10) beabstandet ist, wobei die Achse (21) den Fuß (2) in der Nähe zu dessen zweitem Ende (12) abstützt, wobei der Fuß (2) einen federgespannten Verriegelungsknopf (23) an dessen zweitem Ende (12) umfasst, wobei das Stauelement (9) eine Aufnahme (25) in der Bodenwand umfasst, in der der Verriegelungsknopf (23) in der entfalteten Position entfernbar angeordnet ist, und wobei die Wanne (10) eine federelastische Rohrschelle (125) umfasst, in der der Lichtemitter (3) in der verstauten Position entfernbar angeordnet ist.

5. Leuchtbake (1) gemäß Anspruch 3 oder 4, wobei die Achse (21) ein Paar federgespannter seitlicher Knöpfe (27) umfasst, die in der Nähe des zweiten Endes (12) des Fußes (2) vorgesehen sind, wobei die seitlichen Knöpfe (27) in sich gegenüberliegenden Öffnungen, die in den Seitenwänden vorgesehen sind, entfernbar angebracht sind.

6. Leuchtbake (1) gemäß Anspruch 2, wobei der Lichtemitter (3) einen statischen Abschnitt (62) umfasst, der an dem ersten Ende (4) des Fußes (2) angebracht ist, in dem die Teleskopabschnitte (5) des Lichtemitters (3) in dessen zusammengelegter Position angeordnet sind, wobei der statische Abschnitt (62) mit Ausnahme eines transparenten oder transluzenten Teils, der sich teilweise um seinen Umfang erstreckt, opak ist.

7. Leuchtbake (1) gemäß Anspruch 6, wobei der transparente oder transluzente Teil von dem Befestigungselement (7) weg weist, wenn der Fuß (2) in der entfalteten Position ist.

8. Leuchtbake (1) gemäß Anspruch 6, wobei der statische Abschnitt (62) ein transparentes oder transluzentes rohrförmiges Element (72) umfasst, das innerhalb einer opaken Hülse (70) angeordnet ist, wobei die Hülse (70) in sich eine Öffnung (71) umfasst, um den transparenten oder transluzenten Teil bereitzustellen.

9. Leuchtbake (1) gemäß Anspruch 6, wobei die Teleskopabschnitte (5) eine Mehrzahl transparenter oder transluzenter sich verjüngender hohler Abschnitte (63) umfassen, die jeweils ein unteres Ende mit einem größeren Radius als ein oberes Ende des vorhergehenden Abschnitts umfassen, und wobei die Teleskopabschnitte (5) ferner einen massiven Endabschnitt (64) umfassen, dessen unteres Ende einen größeren Radius als ein oberes Ende des vorhergehenden hohlen Abschnitts umfasst.

10. Leuchtbake (1) gemäß Anspruch 9, wobei der Endabschnitt (64) eine Kappe (68) an dessen oberem Ende umfasst, wobei die Kappe (68) über den Teleskopabschnitten (5) zu liegen kommt, wenn der Lichtemitter (3) in der zusammengelegten Position angeordnet ist.

11. Leuchtbake (1) gemäß Anspruch 2, wobei der Befestigungsmechanismus (7a) zur Befestigung an einem Fahrrad (8) dient, mit dem die Leuchtbake (1) verwendet wird, wobei der Befestigungsmechanismus (7a) eine Klemme (32) zum entfernbaren Anbringen an dem Rahmen (33) eines Sattels (34) des Fahrrads (8) umfasst, wobei die Klemme (32) ein festes Backenelement (35), das sich von dem ersten Ende (11) des Stauelements (9) aus erstreckt, und ein bewegliches Backenelement (36) umfasst, um den Rahmen (33) des Sattels (34) gegen das feste Backenelement (35) festzuhalten, wobei sich eine Gewindestange (37) durch das feste Backenelement (35) und in ein Gewindeloch an dem beweglichen Backenelement (36) erstreckt, wobei das feste Backenelement (35) an dem ersten Ende (11) des Stauelements (9) über ein zweites Scharnier (39) angebracht ist, und wobei das zweite Scharnier (39) in einem Winkel festlegbar ist.

12. Leuchtbake (1) gemäß Anspruch 11, wobei der Befestigungsmechanismus (7a) ferner einen Stützarm (47) zum entfernbaren Anbringen an einer Sattelstange (48) des Fahrrads (8) umfasst, wobei sich der Stützarm (47) von einer Unterseite des Stauelements (9) erstreckt und eine federelastische C-Klemme (50) an dessen äußerem Ende umfasst, um die Sattelstange (48) festzuhalten, wobei die C-Klemme (50) über ein drittes Scharnier (52) an dem äußeren Ende angebracht ist, und wobei das dritte Scharnier (52) in einem Winkel festlegbar ist.

13. Leuchtbake (1) gemäß Anspruch 1, wobei die Lichtquelle eine Leuchtdiode (6), die auf einem Substrat angebracht ist, sowie eine Fresnel-Linse (80) umfasst, die über der Leuchtdiode (6) angeordnet ist.

14. Leuchtbake (1) gemäß Anspruch 1, wobei der Lichtemitter (3) einen statischen Abschnitt (62) umfasst, der an dem ersten Ende (4) des Fußes (2) angebracht ist, in dem die Teleskopabschnitte (5) des Lichtemitters (3) in dessen zusammengelegter Position angeordnet sind, wobei die Teleskopabschnitte (5) eine Mehrzahl sich verjüngender hohler Abschnitte (63) umfassen, die jeweils ein unteres Ende mit einem größeren Radius als ein oberes Ende des vorhergehenden Abschnitts umfassen, und wobei ein größter der Teleskopabschnitte (5) eine umlaufende Nut (102) umfasst, die an einem Punkt entlang seiner Länge in diesem ausgebildet ist, an dem sein Radius kleiner als ein Radius eines oberen Endes des statischen Abschnitts (62) ist.

## Revendications

1. Balise (1) comprenant une base (2) et un émetteur de lumière extensible de façon télescopique (3) monté à une première extrémité (4) de celle-ci, dans laquelle ledit émetteur de lumière (3) comprend une pluralité de sections télescopiques (5), dont au moins l'une est transparente ou translucide, dans laquelle ladite base (2) comprend une source de lumière (6) positionnée pour transmettre la lumière depuis ladite première extrémité (4) dans ledit émetteur de lumière (3), dans laquelle ladite balise (1) comprend en outre un support (7) pour fixer ladite balise (1) à un article (8) à détecter,
**caractérisée en ce que**
ledit support (7) comprend un élément de rangement (9), dans lequel ledit élément de rangement (9) comprend un mécanisme de fixation (7a) à une première extrémité (11) de celui-ci pour fixer ledit élément de rangement (9) à l'article (8) à détecter, dans laquelle une deuxième extrémité (12) de ladite base (2) est montée à une deuxième extrémité (13) dudit élément de rangement (9) par une première charnière (14), ladite base (2) pouvant être déplacée entre une position déployée dans laquelle ladite base (2) est disposée avec sa première extrémité (4) en haut et une position rangée dans laquelle ladite base (2) est coaxiale avec ledit élément de rangement (9).

2. Balise (1) selon la revendication 1, dans laquelle le mécanisme de fixation (7a) sert à fixer l'élément de rangement (9) à l'article (8) à détecter de façon sensiblement horizontale, et dans laquelle, dans la position déployée, la base (2) est sensiblement verticale.

3. Balise (1) selon la revendication 2, dans laquelle ledit élément de rangement (9) comprend une goulotte (10), dans laquelle ladite première charnière (14) comprend un axe (21) s'étendant entre des parois latérales de ladite goulotte (10) le long d'un axe latéral distant d'une paroi d'extrémité de ladite goulotte (10) d'une distance sensiblement égale à celle qui le sépare d'une paroi de fond de ladite goulotte (10), dans laquelle ledit axe (21) supporte ladite base (2) adjacente à ladite seconde extrémité (12), dans laquelle ladite base (2) comprend un bossage de verrouillage à ressort (23) à sa deuxième extrémité (12), dans laquelle ledit élément de rangement (9) comprend une première empreinte (24) dans ladite paroi d'extrémité dans laquelle ledit bossage de verrouillage (23) est situé de manière amovible dans ladite position rangée, et dans laquelle ledit élément de rangement (9) comprend une seconde empreinte (25) dans ladite paroi de fond dans laquelle ledit bossage de verrouillage (23) est situé de manière amovible dans ladite position déployée.

4. Balise (1) selon la revendication 2, dans laquelle l'élément de rangement (9) comprend une goulotte (10), dans laquelle la première charnière (14) comprend un axe (21) s'étendant entre des parois latérales de la goulotte (10) le long d'un axe latéral distant d'une paroi d'extrémité de la goulotte (10) d'une distance sensiblement égale à celle qui le sépare d'une paroi de fond de la goulotte (10), dans laquelle l'axe (21) supporte la base (2) adjacente à la deuxième extrémité (12), dans laquelle ladite base (2) comprend un bossage de verrouillage à ressort (23) à sa deuxième extrémité (12), dans laquelle ledit élément de rangement (9) comprend une empreinte (25) dans ladite paroi de fond dans laquelle ledit bossage de verrouillage (23) est situé de manière amovible dans ladite position déployée, et dans laquelle ladite goulotte (10) comprend un collier de serrage élastique (125) dans lequel ledit émetteur de lumière (3) est situé de manière amovible dans ladite position repliée.

5. Balise (1) selon la revendication 3 ou 4, dans laquelle l'axe (21) comprend une paire de bossages latéraux à ressort (27) adjacents à la deuxième extrémité (12) de la base (2), ces bossages latéraux (27) étant montés de manière amovible dans des ouvertures opposées pratiquées dans lesdites parois latérales.

6. Balise (1) selon la revendication 2, dans laquelle ledit émetteur de lumière (3) comprend une section statique (62) montée sur ladite première extrémité (4) de ladite base (2), dans laquelle lesdites sections télescopiques (5) dudit émetteur de lumière (3) sont disposées dans une position repliée, dans laquelle ladite section statique (62) est opaque à l'exception d'une partie transparente ou translucide qui s'étend sur une partie de sa circonférence.

7. Balise (1) selon la revendication 6, dans laquelle ladite partie transparente ou translucide est orientée à l'opposé dudit support (7) lorsque ladite base (2) est dans ladite position déployée.

8. Balise (1) selon la revendication 6, dans laquelle ladite section statique (62) comprend un élément tubulaire transparent ou translucide (72) disposé à l'intérieur d'un manchon opaque (70), dans lequel ledit manchon (70) comprend une ouverture (71) pour fournir ladite partie transparente ou translucide.

9. Balise (1) selon la revendication 6, dans laquelle les sections télescopiques (5) comprennent une pluralité de sections creuses coniques transparentes ou translucides (63), dont chacune comprend une extrémité inférieure d'un rayon supérieur à celui de l'extrémité supérieure de la section précédente, et dans laquelle les sections télescopiques (5) comprennent en outre une section finale solide (64), dont une extrémité inférieure comprend un rayon supérieur à celui de l'extrémité supérieure de la section creuse précédente.

10. Balise (1) selon la revendication 9, dans laquelle ladite section finale (64) comprend un couvercle (68) à son extrémité supérieure, lequel couvercle (68) recouvre lesdites sections télescopiques (5) lorsque ledit émetteur de lumière (3) est disposé dans ladite position repliée.

11. Balise (1) selon la revendication 2, dans laquelle ledit mécanisme de fixation (7a) est destiné à être fixé à une bicyclette (8) avec laquelle ladite balise (1) est utilisée, dans laquelle ledit mécanisme de fixation (7a) comprend une pince (32) destinée à être montée de manière amovible sur le cadre (33) d'une selle (34) de ladite bicyclette (8), ladite pince (32) comprend un élément de mâchoire fixe (35) s'étendant à partir de la première extrémité (11) dudit élément de rangement (9) et un élément de mâchoire mobile (36) pour capturer ledit cadre (33) de ladite selle (34) contre ledit élément de mâchoire fixe (35), dans lequel une barre filetée (37) s'étend à travers ledit élément de mâchoire fixe (35) et dans une douille taraudée sur ledit élément de mâchoire mobile (36), dans lequel ledit élément de mâchoire fixe (35) est monté à ladite première extrémité (11) dudit élément de rangement (9) par une seconde charnière (39), et dans lequel ladite seconde charnière (39) est verrouillable en position angulaire.

12. Balise (1) selon la revendication 11, dans laquelle le mécanisme de fixation (7a) comprend en outre un bras de support (47) destiné à être monté de manière amovible sur une tige de siège (48) de la bicyclette (8), Ledit bras de support (47) s'étend depuis le dessous de l'élément de rangement (9) et comprend une pince en C élastique (50) à son extrémité extérieure pour capturer ladite tige de selle (48), ladite pince en C (50) étant montée à ladite extrémité extérieure par une troisième charnière (52), et ladite troisième charnière (52) étant verrouillable en position angulaire.

13. Balise (1) selon la revendication 1, dans laquelle la source lumineuse comprend une diode électroluminescente (6) montée sur un substrat, et une lentille de Fresnel(80) disposée sur ladite diode électroluminescente (6).

14. Balise (1) selon la revendication 1 dans laquelle ledit émetteur de lumière (3) comprend une section statique (62) montée sur ladite première extrémité (4) de ladite base (2), dans laquelle lesdites sections télescopiques (5) dudit émetteur de lumière (3) sont disposées dans une position repliée de celui-ci, dans laquelle lesdites sections télescopiques (5) comprennent une pluralité de sections creuses coniques (63), dont chacune comprend une extrémité inférieure d'un rayon supérieur à celui de l'extrémité supérieure de la section précédente, et dans laquelle la plus grande desdites sections télescopiques (5) comprend une rainure circonférentielle (102) formée en un point de sa longueur où son rayon est inférieur à un rayon d'une extrémité supérieure de la section statique (62).
